# EUROPEAN PATENT APPLICATION

(11) **EP 2 113 658 A1**
(43) Date of publication of application: **04.11.2009**
(21) Application number: 08718425.5
(22) Date of filing: 26.01.2008
(51) Int. Cl.: F03B 13/18

(54) **INSTALLATION FOR PRODUCING ELECTRICAL ENERGY FROM SEA WAVES USING THE BASIC IMPULSE METHOD**

(30) Priority: 20.02.2007 ES 200700436
(71) Applicant: De La Cruz Bláquez, Julio, 28015 Madrid (ES)
(72) Inventor: De La Cruz Bláquez, Julio, 28015 Madrid (ES)
(74) Representative: Gonzalez Gomez, Maria Virtudes
(86) International application number: PCT/ES2008/000024
(87) International publication number: WO 2008/102028

(57) **Abstract**

The invention concerns an installation for producing electrical energy from sea waves, using the basic impulse method, in which waves are forced over the float (1), which then slides along the column (4), which is attached to the float (1) at the bottom end by way of the concertinered, flexible cylinder (3) and at the top end by way of the rectangular structure (8) and the articulated structures (10). The rectangular structures (8) supports the generators (6) and the associated inertia discs (7) and the articulated structures comprise platforms (11), which are located above the beams (12), the platforms regulating the movement of the float (1). The float (1) has beams (9), in the form of a ladder, which are attached to the float (1) and are actuated by the catches on the inertia discs, by means of pulses, causing them to rotate, this movement being tansmitted to the generators (6), where it is transformed into electrical energy.

## Description

The object of this invention is to develop and operate an installation for producing electrical energy from the impulse of sea waves, using both their horizontal translation movement and their vertical oscillatory movement in which the waves rise and fall.

### FIELD OF THE ART

This invention lies within the sector of electrical energy production and is included in the Special Regime dedicated to generation of electrical power from renewable sources, as promoted by Royal Decree 2818 / 1998 of 23 December, European Union Directive 2001 / 77 / EC of 27 September, Royal Decree 436 / 2004 and Royal Decree Law 7 /2006. It is an innovative installation model in its various essential components, as it is different from other systems of this type, both national and international, not only by the system used but also by the yield supplied.

### DESCRIPTION OF THE INVENTION

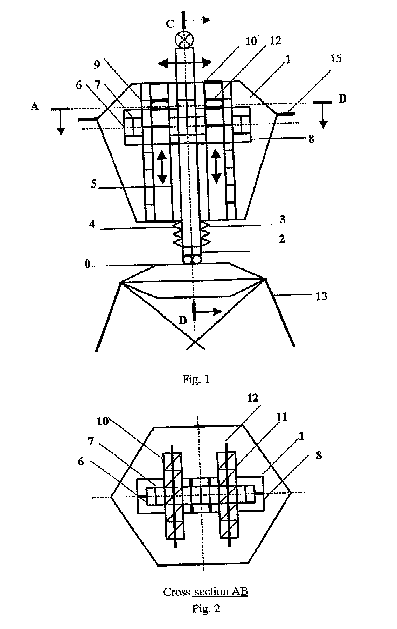

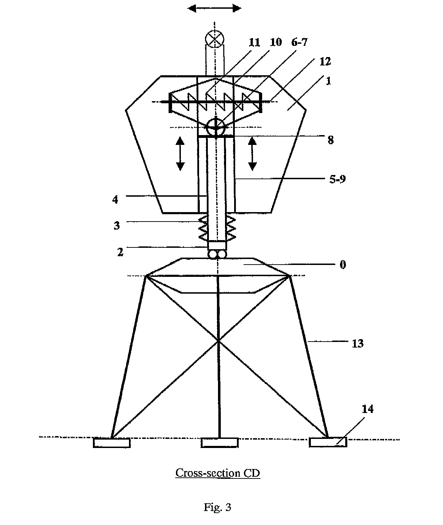

This installation or system will be used to produce electrical energy from the energy of sea waves, using both their horizontal translation movement and their vertical oscillatory movement in both of its aspects, rising and falling (figures 1, 2, 3) by means of the following components: **1) System support unit** constituted by a float (0) with a lenticular shape that is attached to the seafloor by four pairs of cables (13), which in turn are anchored to their corresponding shoes (14); **2) Wave energy capture system,** constituted by: **a)** A float (1) that can have any shape, in this case two truncated pyramids joined at their greater bases, which slides by the action of the waves along a column (4) fixed to the float (0) by a ball and socket cardan joint (2) and to the float (1) by the concertinered, flexible cylinder (3); **b)** Some articulated structures (10), in this case two, attached on one of their ends to the upper face of the float (1) and on their opposite end to the rectangular structure (8) that supports the generators (6); **c)** Each one of the articulated structures (10) carried an elastic spring (11) positioned over a horizontal bar (12) which serves as a guide, spring which facilitates upward and downward movement of float (1) **d)** A series of horizontal beams (9), in this case four, in the form of a ladder from the top to the bottom of the float (1), which act by pulses on the catches of the inertia discs (7); **c)** On another hand, the column (4) is joined to the bottom part of the float (1) by a concertinered cylinder (3) made of a flexible material in order to allow the float (1) to move along said column (4); **3) Electrical energy generator** unit constituted by: a) An even number of generators (6), in this case two or four, according to the structure of the waves, located inside the float (1) and attached to the column (4) by the rectangular structure (8); b) The inertia discs (7) associated to the generators (6), which have catches on which act a number of horizontal beams (9) that are attached to the float (1), anchored from top to bottom inside it, the action of these beams being used to transmit the motion to the generators (6).

### PREFERRED EMBODIMENTS

**1) The support unit of the system** constituted by the lenticular float (0) will be made of plastic or metallic materials, resistant to mechanical action and environmental factors as shown in figures 1, 2 and 3. **2) The anchoring** of the assembly, constituted by the support cables (13) and the shoes (14), shall be made of steel or plastic strand wires, in the case of the former, and large blocks of reinforced concrete and/or cast iron, in the case of the latter, deposited on the seafloor as shown in figures 1, 2 and 3. **3) The seawave energy capture device** constituted by the elements described above will be made of a plastic and/or metallic material resistant to mechanical action and environmental factors, as shown in figures 1, 2 and 3. **4) The electrical energy generator units** constituted by the inertia discs (7), associated to their corresponding generators (6), shall be built of and mounted on metallic and/or plastic materials that can withstand the mechanical action and environmental factors, as shown in figures 1, 2 and 3. **5) The system can be installed** anywhere in the sea, with the following options: a) Offshore, as described; b) In shallow and medium-depth waters the attachment system may be replaced with a metal tower; c) On the shore, the attachment system will be replaced with a fixed structure; **6) Transportation of the electrical energy** to shore will be performed by marine cables, at the required voltage, depending on the distance to the shoreline.

## Claims

1. **Installation for producing electrical energy from the action of sea waves,**
**characterised in that**: **a)** It produces electrical energy using the movement of sea waves, both the horizontal or translation movement and the vertical or oscillatory movement, in both the upward and downward motion of the sea waves; **b)** It has a system support unit constituted by a float (0) that keeps the unit at a constant distance from the seafloor by means of the cables (13) attached to heavy concrete and/or cast iron blocks (14) placed on said floor; **c)** It has a wave-energy capture system constituted by a float (1) that contains the elements that make up the generation units, which slides on the column (4), this column being joined to the float (0) by the cardan joint (2), to the float (1) by a concertinered flexible cylinder (3) and to the generators by the rectangular structure (8); **d)** It has some articulated structures (10), in this case two, each of which contains a spring (11) supported by a guide beam (12); e) It has some generator units, in this case two or four according to the structure of the waves, constituted by the inertia discs (7) associated to the generators (6), which have catches that make them rotate to produce the electrical energy from the action on said catches of the horizontal beams (9) that are joined to the float (1) from its top to bottom. (See figures 1, 2, 3).

2. **System according to claim (1) containing the system support unit,** comprised of the floats (0), the attachment cables (13), the shoes (14) and **characterised in that**: a) It supports the entire system assembly by maintaining it at a depth determined by the action of the attachment cables that counter the upward force generated by the sea water due to Archimedes's principle; b) Its dimensions and volume are variable according to the size of the rest of the system that it must support; c) The float (0) can have any shape, in this case hexagonal lenticular; d) The float (0) is attached to the seafloor by the attachment cables (13) and their corresponding shoes (14).

3. **System according to claims (1 to 2) containing the sea wave energy capture system,** comprised of the float (1) and its components; **characterised in that**: **a)** Its dimensions, capacity or volume can be varied according to the structure of the waves; **b)** Its shape can be cylindrical or prismatic, in the latter case two hexagonal truncated pyramids joined at their greater bases; c) The float (1) slides longitudinally along the column (4) and is joined to it on its bottom by a concertinered, flexible cylinder (3) which allows it to slide on said column; d) The float (1) contains inside it the generators (6) that are attached to it at the top, by the two articulated structures (10) and at the bottom, by the rectangular structure (8), the column (4) and the concertinered, flexible cylinder (3); e) The aforementioned articulated structure (10) contains a spring (11) on its horizontal axis that slides on the beam (12) and when extended or compressed regulates the upward and downward movement of the float (1) by an increase or reduction in the length of its diagonal lengths of the aforementioned structures, due to the action of the sea waves.

4. **System according to claims (1 to 3) containing the electrical energy generation units**, comprised of the generators (6) and their associated inertia discs, and **characterised in that**: **a)** The generators are actuated by their inertia discs (7), which are in turn actuated by the horizontal beams (9) when the catches of said inertia discs (7) are driven by beams that move linearly, as the float (1), since they are joined to it; **b)** The said beams (9) move up and down due to the extension and compression of the springs (11) when the articulated structures (10) act on them, increasing or decreasing their diagonal lengths when the float (1) moves up and down due to the action of the sea waves; c) The number of generators and associated inertia discs must be even, in this case two or four according to the structure of the waves.
